(19) Europäisches Patentamt
European Patent Office
Office européen des brevets

(11) Numéro de publication : **0 033 667**
**B1**

# (12) FASCICULE DE BREVET EUROPÉEN

(45) Date de publication du fascicule du brevet : **28.12.83**

(51) Int. Cl.[3] : **B 41 M 5/24**, G 11 C 13/04, G 11 B 7/24

(21) Numéro de dépôt : **81400004.8**

(22) Date de dépôt : **06.01.81**

## (54) Structure de mémoire réversible, à inscription thermo-optique et lecture optique, et procédé d'inscription et d'effacement de cette structure.

(30) Priorité : **01.02.80 FR 8002245**

(43) Date de publication de la demande : **12.08.81 Bulletin 81/32**

(45) Mention de la délivrance du brevet : **28.12.83 Bulletin 83/52**

(84) Etats contractants désignés : **DE GB IT NL SE**

(56) Documents cités :
**DE-A- 2 744 533**
**DE-B- 2 701 218**
**FR-A- 2 368 779**
**US-A- 3 866 187**
**IBM TECHNICAL DISCLOSURE BULLETIN, vol. 21, no. 2, juillet 1978 New York, US J.J. CUOMO et al.: "*Digital recording by thin film spalling*", pages 859-860**
**IBM TECHNICAL DISCLOSURE BULLETIN, vol. 16, no. 1, juin 1973 New York, US R.J. VON GUTFELD: "Structures for reversible SmS optical memories", pages 108-109**
**CHEMICAL ABSTRACTS, vol. 73, no. 22, 30 novembre 1970, ref, no. 114995r, page 394 Columbus, Ohio, US A.L. HARRIS et al.: "Continuous wave laser recording on metallic thin film"**

(73) Titulaire : **THOMSON-CSF**
**173, Boulevard Haussmann**
**F-75379 Paris Cedex 08 (FR)**

(72) Inventeur : **Cornet, Jean**
**THOMSON-CSF SCPI 173, bld Haussmann**
**F-75360 Paris Cedex 08 (FR)**

(74) Mandataire : **Taboureau, James et al**
**THOMSON-CSF SCPI 173, Bld Haussmann**
**F-75379 Paris Cedex 08 (FR)**

**EP 0 033 667 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Structure de mémoire réversible, à inscription thermo-optique et lecture optique, et procédé d'inscription et d'effacement de cette structure

La présente invention concerne une structure de mémoire réversible, c'est-à-dire qu'elle est inscriptible et effaçable, par voie thermo-optique, cependant que la lecture est faite par voie optique.

Elle s'applique plus particulièrement à la couche d'inscription d'une mémoire de stockage d'informations sur support défilant, une forme répandue de ce type de mémoire étant constituée par les disques optiques. Les disques optiques sont réalisés à partir d'un disque d'un matériau rigide et généralement transparent recouvert d'une fine pellicule d'un matériau absorbant la lumière. Le disque tourne à une vitesse relativement élevée et défile devant une tête de lecture qui décèle les informations qui ont été enregistrées dans la couche absorbante superficielle, informations qui sont le plus généralement stockées sous la forme de perforations dans la couche absorbante. La lecture peut se faire donc par passage d'un faisceau laser à travers les trous de stockage de données et à travers le support transparent du disque optique ; elle peut également se faire par réflexion d'un faisceau laser, à travers le support transparent du disque, sur la couche absorbante. Les informations peuvent également être stockées sous forme d'une déformation de la surface ; dans ce cas, la lecture se fait par réflexion sur la surface déformée.

La technologie actuelle des disques optiques, ou d'une façon plus générale des mémoires défilantes, présente deux types de structure pour la couche d'inscription : les structures non effaçables, telles que celles dans lesquelles sont pratiquées des perforations de la couche métallique qui constitue la couche absorbante, et les structures effaçables.

Dans le domaine des structures non effaçables, le document FR.A.2.368.779, au nom de Thomson-Brandt, révèle une structure comprenant, supportées par un substrat, une première couche de polymère thermo dégradable et une seconde couche de métal. Au cours de l'inscription par faisceau laser, la couche de polymère se dégrade et le dégagement gazeux crée des perforations dans la couche métallique.

Les structures effaçables sont basées sur l'utilisation de matériaux amorphes, métalliques ou semiconducteurs, de matériaux magnéto-optiques, photo-chromes ou photo-dichroïques, qui présentent une différence de propriétés optiques selon qu'ils ont été inscrits ou non par un faisceau laser. L'inconvénient général de ces structures effaçables est un faible rapport signal/bruit car il n'y a pas de modification fondamentale de la structure du matériau de la couche absorbante. Un exemple de structure effaçable est donné dans le brevet US-A-3 866 187 de Dougherty. L'information est stockée dans une couche mince d'un métal ferroélastique par déformation initiale du film de métal jusqu'à un état de contrainte stable. La déformation est obtenue par un jet d'air, un stylet ou une action électrostatique. L'effaçage est obtenu par chauffage local du film de métal jusqu'à une température supérieure à sa température de transition ferroélastique, ce qui supprime les contraintes et restaure la surface du film. Cette structure ne comporte qu'une seule couche de métal, et l'inscription de données dans cette couche est obtenue par des moyens mécaniques — air comprimé ou stylet — ou électrostatiques, tandis que dans l'invention, l'inscription est obtenue par déformation thermique d'une couche bimétallique et la lecture par déviation d'un faisceau optique sur la surface déformée.

L'invention consiste en une nouvelle structure de mémoire réversible, c'est-à-dire effaçable et réinscriptible, présentant un meilleur rapport signal/bruit que les mémoires connues. Cette structure est constituée par une bi-couche, déposée sur le support du disque, qui est doté d'un faible coefficient de dilatation thermique. La bicouche comprend dans un premier cas de réalisation, une première couche d'un matériau métallique ayant un coefficient de dilatation élevé et une seconde couche dont la composition est un alliage se trouvant à la température ambiante dans une phase martensitique et présentant une transformation vers une autre phase cristallographique à une température inférieure à la température de fusion de la première couche. En outre cette seconde couche présente un faible coefficient de dilatation, et de préférence des propriétés de faible ou moyenne adhérence au métal de la première couche.

De façon plus précise l'invention concerne une structure de mémoire réversible à inscription thermo-optique et lecture optique, telle que définie dans la revendication 1.

L'invention sera mieux comprise et ses avantages ressortiront de la description qui suit d'un exemple de réalisation de structure de mémoire, laquelle s'appuie sur les figures suivantes :

figure 1, un schéma représentant l'état d'une martensite en l'absence de tension ;

figure 2, schéma équivalent à celui de la figure 1 mais représentant une martensite sous tension ;

figure 3, schéma équivalent à celui de la figure 1 lorsqu'une martensite est soumise à des compressions ;

figure 4, vue en coupe d'une structure de mémoire réversible selon l'invention.

De façon à simplifier le texte, l'exemple de réalisation choisi pour expliquer l'invention est celui dans lequel la première couche est métallique.

Certains alliages sont caractérisés par une transformation en phase solide, à une température $T_t$, entre une phase de haute température généralement cubique centrée où les atomes sont disposés de façon aléatoire aux nœuds du

réseau et une phase de basse température généralement orthorhombique où un ou plusieurs types d'atomes se placent à des positions et dans des plans particuliers du réseau. Cette transformation appelée martensitique est réversible et se fait la plupart du temps par un processus coordonné de cisaillement affectant de proche en proche toute la structure. C'est donc un processus très rapide car il n'implique pas de migration individuelle d'atome sur de grandes distances.

Lorsque la température diminue au dessous de $T_t$ la « précipitation » d'atomes dans les plans privilégiés de la martensite entraîne la formation de plaquettes reliées les unes aux autres avec des orientations variables. Certaines plaquettes sont en tension, d'autres en compression et l'état des contraintes internes définit les surfaces relatives des différents types de plaquettes afin de rendre minimale l'énergie interne.

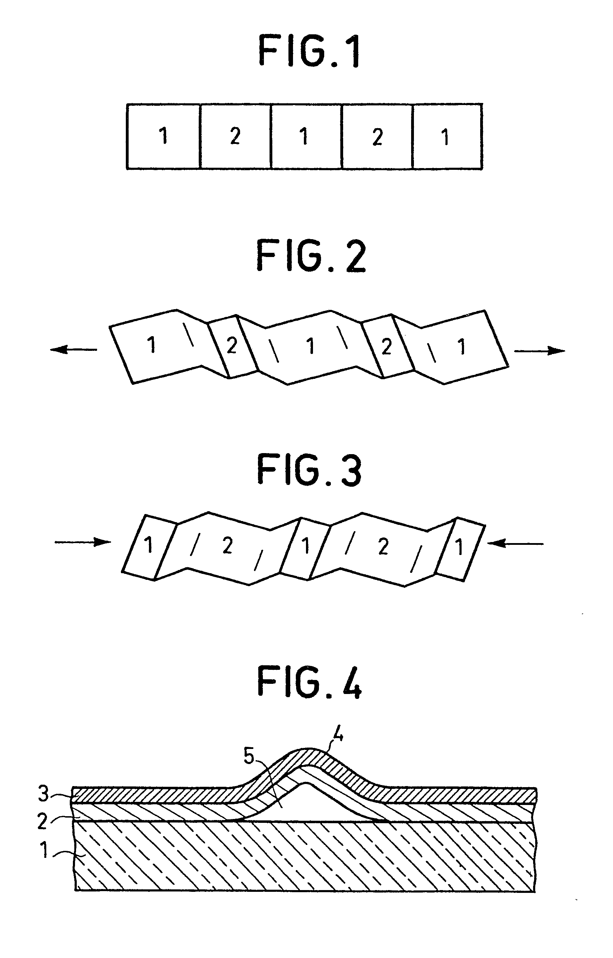

Sur la figure 1, sont représentés deux types de plaquettes qu'on suppose, pour une raison de simplicité, se développer avec la même rapidité. La plaquette 1 est supposée en compression et la plaquette 2 en tension.

En figure 2, lorsque une contrainte de tension est appliquée au matériau, il y a croissance préférentielle des plaquettes 1 et en conséquence il y a déformation de la structure.

En figure 3, si on utilise une contrainte de compression, la déformation s'effectue dans l'autre sens. Il faut noter qu'il s'agit ici d'une déformation microscopique globale sans qu'il y ait glissement relatif des plans cristallographiques comme dans la déformation plastique classique. D'autre part l'effet résultant est le même si on impose à l'échantillon non plus la contrainte mais la déformation.

En résumé une déformation en phase martensitique présente l'intérêt essentiel de procéder par cisaillement et non par glissement interplanaire. Il en résulte qu'une telle déformation peut être complétement effacée par suppression des lamelles martensitiques ce qui se produit dès que la température dépasse $T_t$. Par opposition les déformations de type plastique qui impliquent des glissements interplanaires ne peuvent être effacées.

La transformation martensitique, et la structure de la phase martensitique sont exposés par exemple dans le livre « Physical Metallurgy », par R W Cahn, (1965), dans les pages 509 à 531 notamment. Cependant, l'ouvrage de C.S. Barrett intitulé « Structure des métaux » (1957) est plus pratique et donne un grand nombre d'exemples de phases martensitiques dans les alliages ferreux, c'est-à-dire les aciers, et non ferreux, dans les pages 527 à 542.

L'effet de mémoire d'une structure cristallographique martensitique est mise à profit dans l'invention selon laquelle un support de disque optique est recouvert par une première couche d'un métal à fort coefficient de dilatation et par une seconde couche d'un alliage se trouvant dans une phase martensitique et présentant une température de transformation $T_t$ inférieure à la température de fusion de la première couche. En outre l'alliage doit jouir d'un faible coefficient de dilatation, et de préférence de qualités d'adhérence faible ou moyenne au métal de la première couche.

La figure 4 représente la structure de mémoire réversible selon l'invention.

Sur un substrat 1 préférentiellement plan, rigide, et transparent, sans que ces qualités soient indispensables, sont déposées une première couche métallique 2 puis une seconde couche métallique 3. Selon une forme privilégiée de réalisation de l'invention, la première couche métallique 2 est la couche de métal à fort coefficient de dilatation et la seconde couche métallique 3 est la couche d'alliage se trouvant dans une phase martensitique à la température ambiante. Sous l'effet d'une impulsion thermique, au cours de l'inscription des données sur le disque, la quantité d'énergie apportée par le faisceau laser à son point d'impact à la surface du disque est absorbée par l'ensemble des deux couches métalliques et transformée en chaleur. Le chauffage qui en résulte à une température T inférieure à la température $T_t$ provoque la dilatation différentielle entre les deux couches métalliques. La couche 2 très dilatable communique à la couche 3 moins dilatable une déformation inférieure à la déformation en limite de rupture de la couche 3. Il s'en suit donc pour la couche 3 un relief en forme de protubérance 4. Au cours de l'opération de déformation des deux couches est apparu en 5 un décollement de l'ensemble des deux couches par rapport au substrat. La déformation permanente de la couche 3 ne concerne en fait que les plaquettes de martensite, sans toucher au squelette atomique. Après l'impact du faisceau laser et au cours du refroidissement, la couche dilatable 2 se décolle de la couche de martensite 3 mais cela n'intervient pas dans le résultat de l'inscription de données sur le disque.

La présente structure est effaçable et réversible en ce sens que si la couche martensitique 3 est portée soit par une impulsion de puissance plus élevée, soit par un défilement plus lent du support devant la source d'énergie, soit par un chauffage global, à une température supérieure à la température $T_t$ de transformation de la phase martensitique en sa phase parente, l'alliage vient alors dans sa phase parente et retrouve sa forme initiale en se recollant à la couche dilatable 2 qui a précédemment repris sa forme initiale. Après l'opération d'effacement, qui a lieu à une température relativement élevée, c'est-à-dire supérieure à la température de transformation $T_t$, la couche d'alliage 3 revient en phase martensitique, au cours du refroidissement.

Par conséquent, on voit qu'à partir d'une structure plane comportant une première couche très dilatable et une seconde couche moins dilatable, mais en phase martensitique à température ambiante, il est possible d'enregistrer des données sous la forme d'une déformation à la surface de la couche inscriptible puis d'effacer ces données et de revenir à l'état initial par une seconde

opération de chauffage à une température supérieure à la température de la première opération d'inscription des données.

La réalisation de la structure de mémoire selon l'invention fait appel pour la couche de métal très dilatable à l'un des métaux tels que : cadmium, zinc, thalium, magnésium, aluminium, manganèse, argent, pris isolément ou en combinaison. La seconde couche métallique, c'est-à-dire la couche d'alliage en phase martensitique, est obtenue au cours d'une opération d'évaporation sous vide qui suit l'évaporation de la première couche métallique, dans le même bâti et sans changement de technologie, par le dépôt de l'un des alliages ci-après dans leur phase martensitique : fer-nickel, fer-platine, titane-nickel, nickel-aluminium, or-cadmium, cuivre-zinc, ou par des aciers inoxydables ou encore des mélanges ternaires tels que cuivre-zinc-aluminium, contenant de 68 à 30 % de cuivre, de 10 à 28 % de zinc, de 4 à 10 % d'aluminium et répondant aux formules particulières :

$$Cu_{75}\,Zn_{18}\,Al_{7}$$

dont la température de transformation est égale à 170° centigrades, et $Cu_{79}\,Zn_{13}\,Al_{8}$, dont la température de transformation est égale à 300 °C.

L'épaisseur requise pour chacune des deux couches 2 et 3 de la figure 4 est de l'ordre de 3 à 5 nanomètres pour chacune des deux couches.

Ce type de structure de mémoire réversible présente un certain nombre d'intérêts pratiques.

En premier lieu, la vitesse d'effacement est très rapide car il n'y a pas de migration atomique, mais seulement cisaillement affectant de proche en proche toute la structure. Il suffit donc de faire défiler la mémoire enregistrée sous une tête de laser apportant une certaine quantité d'énergie pour effacer les données inscrites.

En second lieu, cette structure effaçable presente par rapport aux structures effaçables connues un meilleur rapport signal/bruit.

En outre la technologie de réalisation est simplifiée puisque le dépôt des deux couches métalliques 2 et 3 se fait par une suite d'opérations dans le même bâti à vide.

La protection des données enregistrées est possible en raison de l'état de dureté de la surface enregistrée par dépôt d'une laque thermique photosensible, par vernis polymère en solution, ou par un capot rigide, de préférence transparent, qui protège l'ensemble de la surface de la mémoire enregistrée.

A partir de ces considérations sur la valeur de l'état de surface enregistrée, il s'ensuit que la duplication est possible par exemple au moyen de laques photopolymérisables. C'est ainsi que l'archivage par dépôt des couches métalliques épaisses est rendu possible pour conserver les données enregistrées pendant des temps longs.

Cette structure de mémoire effaçable est principalement utilisée dans le cas de disques optiques mais son domaine d'utilisation appartient d'une façon plus générale aux moyens d'archivage à enregistrement thermo-optique, et lecture optique sur des supports rigides ou souples, plans ou cylindriques, et animés d'un mouvement soit de rotation, soit linéaire.

En outre appartiennent au domaine de l'invention les cas de réalisations dans lesquels le nombre de couches métalliques est supérieur à 2, c'est-à-dire les cas dans lesquels le support serait recouvert d'abord d'une couche métallique d'accrochage pour la couche métallique 2 très dilatable et ensuite d'une quatrième couche métallique déposée par dessus la couche martensitique 3, cette quatrième couche métallique étant destinée à communiquer à la surface de la mémoire enregistrée un meilleur état de réflexion ou une protection contre l'oxydation par exemple.

D'autres variantes de la présente invention ressortiront des revendications ci-après.

## Revendications

1. Structure de mémoire réversible, à inscription thermo-optique et lecture optique, comprenant une couche inscriptible métallique de nature martensitique supportée par un substrat (1), en un matériau à faible coefficient de dilatation et animé d'un mouvement de défilement, cette structure étant caractérisée en ce que la couche inscriptible est bimétallique et comprend :

— en contact avec le substrat (1), une première couche (2), en métal à coefficient de dilatation élevé,

— déposée sur la première couche (2), une seconde couche (3), en alliage à coefficient de dilatation moins élevé que celui de la première couche (2), et qui se trouve à température ambiante dans une phase martensitique,

— l'inscription étant obtenue par voie thermique, par un chauffage local de dilatation de la première couche (2) qui déforme la seconde couche (3) martensitique,

— la lecture étant obtenue par voie optique, par réflexion sur la déformation (4) de la surface de la seconde couche martensitique (3).

2. Structure de mémoire selon la revendication 1, caractérisée en ce que la première couche (2) est une couche métallique très dilatable et réalisée au moyen des métaux suivants : Cd, Zn, Tl, Mg, Al, Mn, Ag, pris isolément ou en alliage.

3. Structure de mémoire selon la revendication 1, caractérisée en ce que la couche martensitique (3) est réalisée au moyen de l'un des alliages suivants : acier inoxydable, Fe-Ni, Fe-Pt, Ti-Ni, Ni-Al, Au-Cd, Cu-Zn, Cu-Zn-Al.

4. Procédé d'inscription dans une structure de mémoire selon la revendication 1, caractérisé en ce que l'inscription se traduit par une déformation de la couche martensitique (3), cette déformation étant inférieure à la limite de rupture de ladite couche martensitique (3).

5. Procédé d'inscription dans une structure de mémoire selon l'une quelconque des revendications 1 à 4, caractérisé en ce que le moyen

d'inscription est une impulsion énergétique, apportée par un faisceau laser et absorbée par la double couche métallique (2 + 3) de la structure dans laquelle elle se transforme en chaleur, la quantité d'énergie apportée étant suffisante pour que la première couche (2) de métal dilatable communique à la seconde couche (3) d'alliage martensitique une déformation, la température restant inférieure à la température de transition de la phase martensitique vers une autre phase.

6. Procédé d'effacement d'une structure de mémoire dans laquelle des données ont été inscrites selon la revendication 5, caractérisé en ce que le moyen d'effacement est une impulsion énergétique, apportée par un faisceau laser et absorbée par la double couche (2 + 3) métallique de la structure dans laquelle elle se transforme en chaleur, la quantité d'énergie apportée étant suffisante pour amener la seconde couche (3) d'alliage à une température supérieure à la température de transition de la phase martensitique vers une autre phase.

## Claims

1. A reversible memory structure for thermo-optical recording and optical reading, including a metal memory layer of the martensitic type deposited on a substrate (1) which is constituted of a material having a low expansion coefficient and wich is submitted to a movement, characterized in that the memory layer is a bimetallic layer and comprises

— a first layer (2) of a metal having a high expansion coefficient and being in contact with the substrate (1) and

— a second, superimposed layer (3) of an alloy having a lower expansion coefficient that the first layer (2) and being in a martensitic phase at ambient temperature,

— whereby recording takes place by locally heating the first layer which thereby expands itself and deforms the second, martensitic layer, and

— reading takes place by reflection of light on the deformed surface (4) of the second, martensitic layer (3).

2. A memory structure according to claim 1, characterized in that the first layer (2) is a highly expandable metal layer and is made from the following metals: Cd, Zn, Tl, Mg, Al, Mn, Ag, considered individually or in alloy form.

3. A memory structure according to claim 1, characterized in that the martensitic layer (3) is made from one of the following alloys: stainless steel, Fe-Ni, Fe-Pt, Ti-Ni, Ni-Al, Au-Cd, Cu-Zn, Cu-Zn-Al.

4. A method for recording data in a memory structure according to claim 1, characterized in that the recording leads to a deformation of the martensitic layer (3), said deformation being less than the breaking limit of said martensitic layer (3).

5. A method for recording data in a memory structure according to any one of the claims 1 to 4, characterized in that the recording means is an energy pulse supplied by a laser beam and absorbed by the double metal layer (2 + 3) of the structure in which it is transformed into heat, the energy quantity supplied being sufficient for the first layer (2) of expansible metal to transmit a deformation to the second layer (3) of martensitic alloy, the temperature remaining below the temperature of transition from the martensitic phase to another phase.

6. A method for erasing data from a memory structure in which the data have been recorded according to claim 5, characterized in that the erasure means comprise an energy pulse supplied by a laser beam and absorbed by the double metal layer (2 + 3) of the structure in which it is transformed into heat, the supplied energy quantity being sufficient to raise the temperature of the second, alloy layer to a value which is higher than the transition temperature from the martensitic phase to another phase.

## Ansprüche

1. Reversible Speicherstruktur, bei der Daten thermo-optisch eingeschrieben und optisch ausgelesen werden, mit einer metallischen Speicherschicht martensitischer Art, die von einem Substrat (1) getragen wird, wobei dieses Substrat aus einem Material mit geringem Ausdehnungskoeffizienten besteht, und einer Bewegung ausgesetzt ist, dadurch gekennzeichnet, daß die Speicherschicht eine Bimetallschicht ist und

— eine erste Metallschicht (2) mit großem Ausdehnungskoeffizienten in Kontakt mit dem Substrat (1) und

— eine zweite Schicht (3) aus einer Legierung mit einem niedrigeren Ausdehnungskoeffizienten als die erste Schicht (2) und diese überdeckend aufweist, wobei die zweite Schicht sich bei Umgebungstemperatur in einer martensitischen Phase befindet,

— wobei das Einschreiben auf thermischem Weg durch lokale Erhitzung und Ausdehnung der ersten Schicht (2), die die zweite, martensitische Schicht (3) verformt, und

— das Lesen auf optischem Weg durch Reflexion an der Verformung (4) der Oberfläche der zweiten, martensitischen Schicht (3) erfolgt.

2. Speicherstruktur nach Anspruch 1, dadurch gekennzeichnet, daß die erste Schicht (2) eine Metallschicht ist, die sich stark ausdehnen kann und mithilfe folgender Metalle oder deren Legierungen hergestellt ist: Cd, Zn, Tl, Mg, Al, Mn, Ag.

3. Speicherstruktur nach Anspruch 1, dadurch gekennzeichnet, daß die martensitische Schicht (3) aus einer der folgenden Legierungen besteht: rostfreier Stahl, Fe-Ni, Fe-Pt, Ti-Ni, Ni-Al, Au-Cd, Cu-Zn, Cu-Zn-Al.

4. Verfahren zum Einschreiben von Daten in eine Speicherstruktur nach Anspruch 1, dadurch gekennzeichnet, daß das Einschreiben zu einer Verformung der martensitischen Schicht (3)

führt, die unterhalb der Bruchgrenze dieser martensitischen Schicht (3) bleibt.

5. Verfahren zum Einschreiben von Daten in eine Speicherstruktur nach einem beliebigen der Ansprüche 1 bis 4, dadurch gekennzeichnet, daß das Schreibmittel ein energiereicher Impuls ist, der von einem Laserstrahl stammt und in der metallischen Doppelschicht (2 + 3) der Struktur absorbiert wird, in der er sich in Wärme umwandelt, wobei die zugeführte Energiemenge ausreicht, damit die erste stark ausdehnungsfähige Metallschicht (2) der zweiten Schicht (3) aus einer martensitischen Legierung eine Verformung verleiht, und die Temperatur unter der Übergangstemperatur von der martensitischen Phase in eine andere Phase bleibt.

6. Verfahren zum Löschen der nach Anspruch 5 in eine Speicherstruktur eingeschriebenen Daten, dadurch gekennzeichnet, daß das Löschmittel ein energiereicher Impuls ist, der von einem Laserstrahl stammt und in der metallischen Doppelschicht (2 + 3) der Struktur absorbiert wird, in der er sich im Wärme umwandelt, wobei die zugeführte Energiemenge ausreicht, um die zweite, die Legierungsschicht (3) auf eine höhere Temperatur als die Übergangstemperatur von der martensitischen Phase in eine andere Phase zu bringen.

FIG.1

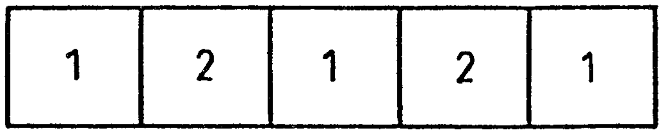


FIG.2

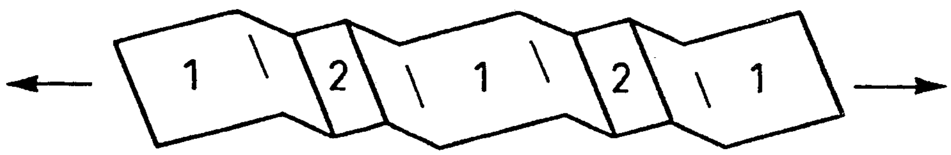


FIG.3

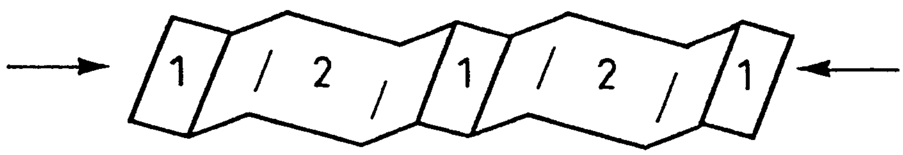


FIG.4